# EUROPÄISCHE PATENTANMELDUNG

(11) **EP 4 002 515 A1**
(43) Veröffentlichungstag der Anmeldung: **25.05.2022**
(21) Anmeldenummer: 21208167.3
(22) Anmeldetag: 15.11.2021
(51) Int. Cl.: H01M 4/13, H01M 4/36, H01M 10/052, H01M 10/056

(54) **BATTERIEZELLEN MIT SEPARATER LITHIUM-IONEN-QUELLE SOWIE VERFAHREN ZUR HERSTELLUNG EINER BATTERIEZELLE**

(30) Priorität: 20.11.2020 DE 102020130798
(71) Anmelder: Volkswagen Aktiengesellschaft, 38440 Wolfsburg (DE)
(72) Erfinder: Kunze, Miriam, 30926 Seelze (DE); Koch, Stephan Leonhard, 38239 Salzgitter (DE)
(74) Vertreter: karo IP

(57) **Zusammenfassung**

Die vorliegende Erfindung betrifft ein Batteriezelle (1) mit einem Zellstapel (5), der wenigstens eine Anode (6), eine Kathode (8), einen dazwischen angeordneten Separator (7) und einen Elektrolyten (9) aufweist, die zusammen von einer Hülle (2) umschlossen sind. Die Batteriezelle (1) zeichnet sich dadurch aus, dass innerhalb der Hülle (2) mindestens eine separate Lithium-Ionen-Quelle (17) angeordnet ist, die in direktem Kontakt mit dem Elektrolyten (9) steht.

## Beschreibung

Die vorliegende Erfindung betrifft eine Batteriezelle mit einem Zellstapel oder -wickel, der wenigstens eine Anode, eine Kathode, einen dazwischen angeordneten Separator und einen Elektrolyten aufweist, die zusammen von einer Hülle umschlossen sind. Eine solche Batteriezelle kann insbesondere in einem Kraftfahrzeug eingesetzt werden.

Im Stand der Technik sind verschiedene Arten von Batteriezellen bekannt, die in der Regel als galvanische Zellen ausgebildet sind. Derartige Batteriezellen werden beispielsweise zur Bereitstellung von elektrischer Energie für den Antrieb von Fahrzeugen verwendet. Eine andere Anwendung ist die Versorgung von mobilen Geräten wie beispielsweise Mobilfunkgeräten, Tabletts oder Laptops mit elektrischer Energie für deren Betrieb. Aufgrund der ständig steigenden Anforderungen an derartige Batterien und die darin verbauten Batteriezellen ist es ein fortwährendes Bestreben, die Lebensdauer der Batterien möglichst zu verlängern und gleichzeitig die Leistung der Batteriezelle bzw. die Menge der speicherbaren und nutzbaren elektrischen Energiemenge über eine möglichst lange Lebensdauer zu erhalten.

So ist es beispielsweise aus der JP 2017 033 692 A bekannt, Nebenprodukte zu entfernen, die während des Betriebs einer wiederaufladbaren Batteriezelle entstehen. Hierzu wird ein Regenerierungsmittel für die wiederaufladbare Batteriezelle eingesetzt, dass ein Oxid eines Übergangsmetalls und einen Chelatbildner enthält, der dazu geeignet ist, eine Komplexbildung mit dem Oxid des Übergangsmetalls zu erzeugen.

Weiterhin ist in der CN 110048154A eine Lösung für wiederaufladbare Batterien beschrieben, bei der ein in einer Lithium-Ionen-Batterie verwendeter Elektrolyt regeneriert werden kann. Dazu wird ein Elektrolyt in einer Kapsel innerhalb einer Lithium-Ionen-Batterie vorgehalten. Um den in der Lithium-Ionen-Batterie außerhalb der Kapsel befindlichen Elektrolyten zu regenerieren, ist es dabei vorgesehen, die Kapsel zu zerstören und den in der Kapsel befindlichen Elektrolyten freizusetzen.

Die bislang bekannten Konzepte haben jedoch unterschiedliche Nachteile. So ist die Verwendung von Chelatbildnern und die damit einhergehende Komplexbildung mit einem zusätzlichen Aufwand verbunden. Dies verteuert und verkompliziert die Herstellung dieser Art von Batteriezellen. Weiterhin erfordert die Anordnung von Elektrolyten in vorgefertigten Kapseln einen zusätzlichen Herstellungsaufwand und ist zudem bezüglich der Freisetzungsraten des Elektrolyten nur bedingt einstellbar.

Aufgabe der vorliegenden Erfindung ist es daher, die sich aus dem Stand der Technik ergebenden Probleme zumindest teilweise zu lösen. Insbesondere sollen eine Batteriezelle und ein Verfahren zu deren Herstellung angegeben werden, deren Verschleißverhalten bzw. Alterungsprozess vermieden oder aber zumindest deutlich reduziert bzw. verlangsamt ist.

Zur Lösung dieser Aufgaben trägt eine Batteriezelle mit den Merkmalen gemäß Patentanspruch 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Hierzu trägt eine Batteriezelle bei, welche einen Zellstapel oder Zellwickel umfasst, der wenigstens eine Anode, eine Kathode, einen dazwischen angeordneten Separator und einen Elektrolyten aufweist. Diese sind zusammen von einer Hülle umschlossen. Hierbei ist innerhalb der Hülle mindestens eine separate Lithium-Ionen-Quelle angeordnet, die in direktem Kontakt mit dem Elektrolyten steht.

Durch die Anordnung der mindestens einen Lithium-Ionen-Quelle unmittelbar im Elektrolyten oder in direktem Kontakt mit diesem, ist es möglich, die während des Betriebs der Batteriezelle verbrauchten Lithium-Ionen fortlaufend und in besonders gleichförmiger Weise zu ersetzen. Die im Neuzustand im Elektrolyten vorhandenen Lithium-Ionen, welche für die Speicherung von elektrischer Energie benötigt werden, verringern sich in ihrer Anzahl während des Betriebs der Batteriezelle. Hierbei handelt es sich um eine Art von Verbrauch an Lithium-Ionen, der unterschiedliche Gründe haben kann. So können die Lithium-Ionen beispielsweise durch chemische Reaktionen dauerhaft gebunden werden oder sich aufgrund von unterschiedlichen Potentialen dauerhaft an anderen Elementen anlagern, um nur einige Gründe für den Verbrauch bzw. die Reduzierung der für die Speicherung von elektrischer Energie zur Verfügung stehenden Lithium-Ionen zu benennen.

Die vorliegende Erfindung hat nun erkannt, dass es vorteilhaft ist, eine (vom Elektrolyten wenigstens zeitweise bzw. teilweise separierte) Lithium-Ionen-Quelle innerhalb der Hülle der Batteriezelle anzuordnen. Hierbei handelt es sich um (gespeicherte) Lithium-Ionen, die im Neuzustand der Batteriezelle zunächst nicht benötigt werden, sondern als Vorrat vorgehalten werden, weil sich im Neuzustand zunächst genügend Lithium-Ionen im Elektrolyten befinden. Bei den Lithium-Ionen der Lithium-Ionen-Quelle handelt es sich somit um einen vom Elektrolyten getrennten Vorrat von Lithium-Ionen. Werden nun im Lauf des Betriebes Lithium-Ionen des Elektrolyten verbraucht, so können diese fortlaufend mit Lithium-Ionen ersetzt werden, die aus dem Vorrat der Lithium-Ionen-Quelle in das Elektrolyt überführt werden. Dieses Überführen der Lithium-Ionen von der Lithium-Ionen-Quelle in den Elektrolyten geschieht beispielsweise durch Auswaschen oder Auslaugen der Lithium-Ionen aus der Lithium-Ionen-Quelle. Hierzu ist die Lithium-Ionen-Quelle in direktem Kontakt mit dem Elektrolyten und innerhalb der Hülle der Batteriezelle angeordnet.

Unter einer Hülle ist grundsätzlich jedes Bauteil zu verstehen, dass dazu geeignet ist, einen Zellstapel und den zugehörigen Elektrolyten dicht zu umschließen. Hierbei kann es sich beispielsweise um eine Pouchfolie und/oder ein festes Gehäuse einer Batteriezelle handeln. Die für den ordnungsgemäßen Betrieb der Batteriezellen erforderlichen übrigen Komponenten wie Anoden, Kathoden, Separatoren, Hüllen, Ableiterfähnchen und Ableitertabs können so problemlos zusammen mit der Lithium-Ionen-Quelle ebenfalls innerhalb der Hülle angeordnet werden. Für die genannten übrigen Komponenten können grundsätzlich die im Stand der Technik bekannten und geeigneten Komponenten verwendet werden.

Durch die vorstehende Gestaltung der Batteriezelle kann erreicht werden, dass während der gesamten Lebensdauer der Batteriezelle eine konstante oder zumindest nahezu konstante Menge von Lithium-Ionen im Elektrolyten vorhanden und für die Speicherung von elektrischer Energie nutzbar ist. Dieser Zustand kann so lange beibehalten werden, bis die Lithium-Ionen-Quelle nicht mehr in der Lage ist, weitere-Lithium-lonen abzugeben.

Es wird mit der Erfindung erreicht, dass die Batteriezelle in der Lage ist, über einen sehr viel längeren Zeitraum als bisher bekannt, d. h. über sehr viel mehr Zyklen, elektrische Energie zu speichern und gleichzeitig über diesen längeren Zeitraum auch eine sehr viel konstantere Speicherkapazität erhalten kann, als dies bisher möglich war.

Insbesondere kann die Batteriezelle so gestaltet sein, dass mindestens eine Lithium-Ionen-Quelle ein Feststoff ist. Zunächst einmal ist es möglich, auch mehrere und unterschiedliche Lithium-Ionen-Quellen gleichzeitig innerhalb einer Batteriezelle anzuordnen. Hierdurch kann beispielsweise die Konzentration der Lithium-Ionen innerhalb des Elektrolyten vergleichmäßigt werden, indem die Abgabe von Lithium-Ionen aus der Lithium-Ionen-Quelle an mehreren voneinander räumlich getrennten Orten oder in unterschiedlichen Mengen erfolgt.

Ganz besonders vorteilhaft ist es zudem, wenn die Lithium-Ionen-Quelle ein Feststoff ist, der als Matrix zur Aufnahme von Lithium-Ionen ausgebildet ist. Eine Matrix im Sinne der vorliegenden Erfindung ist dabei jeder Stoff, jeder Körper, jede Struktur, wie etwa eine Kristallstruktur oder jede sonstige Anordnung von Molekülen bzw. Molekülketten, die dazu geeignet ist Lithium-Ionen aufzunehmen und bei Bedarf abzugeben.

Insbesondere vorteilhaft ist es dabei, wenn die Konzentration der Lithium-Ionen in der mindestens einen Lithium-Ionen-Quelle zwischen 2 mol/Liter bis 40 mol/Liter beträgt. Der genannte Bereich von Konzentrationen hat sich als besonders vorteilhaft erwiesen, um Lithium-Ionen von der Lithium-Ionen-Quelle in den Elektrolyten abzugeben. So kann beispielsweise die Konzentration der Lithium-Ionen in der Lithium-Ionen-Quelle innerhalb dieses Wertebereichs an die Konzentration der Lithium-Ionen des Elektrolyten angepasst werden, die dieser im Neuzustand bzw. Ausgangszustand aufweist. Werden nun Lithium-Ionen des Elektrolyten verbraucht, gibt die Lithium-Ionen-Quelle aufgrund des dabei sich einstellenden Konzentrationsgefälles zwischen dem Elektrolyten und der Lithium-Ionen-Quelle Lithium-Ionen an den Elektrolyten ab. Die Ionen wandern dabei von dem Ort der höheren Konzentration zu dem Ort der niedrigeren Konzentration.

Besonders vorteilhaft kann vorgesehen werden, dass die mindestens eine Lithium-Ionen-Quelle wenigstens eine Keramik, ein Glas, eine Glaskeramik oder ein Polymer umfasst. So können beispielsweise Polymere mit einer Konzentration von 2 mol/Liter [mol/l] am unteren Ende des Wertebereichs bis hin zu Verbindungen wie beispielsweise Lithium Lanthan Zirkonat (LLZO) mit einer Konzentration von 40 mol/Liter hierfür verwendet werden.

Unter einem Festkörper sind dabei solche Körper zu verstehen, die bei den üblicherweise in einer Batteriezelle herrschenden Temperaturen starr sind oder zumindest eine nur sehr geringe Neigung zum Fließen aufweisen, wie dies beispielsweise bei Polymeren der Fall sein kann.

Bei Batteriezellen mit klassischer Lithium-Ionen-Technologie wird der übliche Temperaturbereich einerseits durch Anwendungsanforderungen und andererseits durch die Limitierungen der eingesetzten Komponenten bestimmt. So müssen Batteriezellen im Winter auch bei sehr kalten Temperaturen von beispielsweise bis zu -25°C und im Sommer bei sehr hohen Temperaturen bis ca. 60°C funktionieren. Während bei heute üblichen Batteriezellen die Alterung der Komponenten bei hohen Temperaturen, insbesondere bei Temperaturen über 60°C, signifikant ansteigt, ist es alternativ möglich, Systeme mit sogenannten Feststoffzellen zu verwenden, die auch bei höheren Temperaturen betrieben werden können oder müssen.

Insbesondere können Fasern, Partikel aus Gläsern, Keramiken, Glaskeramiken und Polymeren verwendet werden, die in der Regel in dem zuvor genannten Temperaturbereich stabil sind. Im Hinblick auf künftige Anwendungen und Technologien können damit Batteriezellen auch bei Temperaturen betrieben werden, die im Bereich von -40°C bis +80°C liegen.

Insbesondere kann dabei ein Feststoff verwendet werden, der eine Partikelgröße aufweist, die zwischen 0,1 µm und 20 µm [Mikrometer] liegt. Derartige Partikelgrößen haben den Vorteil, dass diese gut vom Elektrolyten umströmt werden können und gleichzeitig eine besonders große Oberfläche für den Prozess des Auswaschens bzw. Auslaugens bereitstellen. Insbesondere vorteilhaft ist es, die Partikelgröße im Bereich von 0,2 µm bis 5 µm wählen.

Partikel mit diesen geometrischen Abmessungen können gut in konventionellen Beschichtungsprozessen verarbeitet werden, was sich kostenseitig positiv auswirkt. Partikel mit größeren Abmessungen würden zu größeren Minimal-Schichtdicken führen, was tendenziell nachteilig wäre. Partikel mit kleineren Abmessungen, wie beispielsweise im Bereich der Nanopartikel, würden u.a. erhöhte Anforderungen im Hinblick auf die Arbeitssicherheit bei der Verarbeitung stellen, was jedoch vermeiden werden soll. Außerdem können sehr kleine Partikel nur sehr schwer die Freisetzung von Lithium-Ionen über einen langen Zeitraum realisieren, was jedoch gerade für die vorliegende Erfindung wichtig ist.

Besonders vorteilhaft kann die Batteriezelle so ausgebildet werden, dass die mindestens eine Lithium-Ionen-Quelle in Form einer Beschichtung oder eines Spenderobjektes ausgebildet ist. Hierbei kann eine Beschichtung, die einfach auch als Schicht bezeichnet werden kann, besonders bauraumsparend beispielsweise auf der Innenseite der Hülle der Batteriezelle, den Separatoren oder den Elektroden aufgebracht werden. Der Begriff "Beschichtung" kann in diesem Zusammenhang vorsehen, dass die Lithium-Ionen-Quelle als eigenständige Schicht auf einer Komponente ausgebildet ist. Diese kann dazu beispielsweise in Form einer Schicht auf dem Aktivmaterial einer Anode, einer Kathode, eines Separators oder einer sonstigen Oberfläche innerhalb der Hülle aufgebracht sein. Alternativ und/oder kumulativ kann die Lithium-Ionen-Quelle als integraler Bestandteil einer Komponente ausgebildet sein. Hierbei kann die Lithium-Ionen-Quelle beispielsweise ein Bestandteil der Elektroden und Separatoren sein. Insbesondere bietet es sich dazu an die Lithium-Ionen-Quelle bereits bei der Herstellung in das Aktivmaterial der Anoden bzw. Kathoden oder den Werkstoff der Separatoren oder Hüllen zu integrieren. Alternativ kann die Lithium-Ionen-Quelle beispielsweise als Spenderobjekt in Form von Körpern mit nahezu beliebigen geometrischen Formen, Fasern oder sonstigen Festkörpern innerhalb der Hülle der Batteriezelle ausgebildet und angeordnet sein. Verwendet man beispielsweise Fasern, die als Lithium-Ionen-Quelle ausgebildet sind, können diese in den Separatoren angeordnet werden. Dort können Sie als Quelle für Lithium-Ionen dienen und bei Bedarf gegebenenfalls sogar aufgrund der Fasereigenschaften die mechanischen Eigenschaften der Separatoren verbessern. Hierzu ist es insbesondere möglich Polymer- oder Glasfasern zu verwenden, die besonders einfach herzustellen sind. Alternativ kann die Lithium-Ionen-Quelle auch als separater Körper ausgebildet sein, der bei der Herstellung der Batteriezelle zusammen mit dem Elektrolyten und den übrigen Komponenten in der Hülle angeordnet wird.

Bei einer Ausbildung der Lithium-Ionen-Quelle als Beschichtung kann insbesondere eine Schichtdicke der Lithium-Ionen-Quelle zu Anwendung kommen, die zwischen 0,02 µm bis 20 µm [Mikrometer] beträgt.

Grundsätzlich können zum Auftrag der Beschichtung verschiedene Verfahren verwendet werden. Beschichtet werden können beispielsweise Separatoren, Elektroden oder alle innerhalb der Hülle der Batteriezelle befindlichen Oberflächen.

Besonders geringe Schichtdicken, die beispielsweise im Bereich von 0,05 µm bis 20 µm liegen und insbesondere solche die zwischen 1 µm bis 6 µm liegen, können mittels bekannter Verfahren wie beispielsweise dem Verfahren des Physical Vapour Deposition [PVD], Chemical Vapour Deposition [CVD] oder Atomic Layer Deposition [ALD] auf Oberflächen innerhalb der Hülle der Batteriezelle aufgebracht werden.

Eine grundsätzlich andere Form der Beschichtung kann mittels lösemittelhaltiger Beschichtungen erfolgen. Hierbei wird die Lithium-Ionen-Quelle zunächst mit einem Bindemittel und einem Lösemittel gemischt. Danach erfolgt ein Auftrag dieses Gemisches auf die entsprechend gewählte Oberfläche innerhalb der Batteriezelle mit einem anschließenden Verdampfen des darin enthaltenen Lösemittels. Hierdurch verbleiben auf der gewählten Oberfläche die Lithium-Ionen-Quelle und das gewählte Bindemittel. Die verbleibende Schicht weist beispielsweise einen Bindemittelanteil im Bereich von 1 Vol% bis 80 Vol% und einen Anteil der Lithium-Ionen-Quelle von 99 Vol% bis 20 Vol% auf. Die Lithium-Ionen-Quelle kann dabei beispielsweise ein Festkörper oder ein Polymer sein, wie dies zuvor beschrieben worden ist. Als geeignete Schichtdicke dieser lösungsmittelbasierten Beschichtung können Schichtdicken aus Festkörper und Bindemittel verwendet werden, die zwischen 0,5 µm bis 20 µm und insbesondere zwischen 1 µm und 6 µm betragen.

Vorzugsweise ist das Lösemittel so gewählt, dass es nur das Bindemittel, nicht aber die Lithium-Ionen-Quelle zu lösen vermag. Dies gilt insbesondere bei der Verwendung von Polymeren als Lithium-Ionen-Quelle. Zudem ist es bei bestimmten Anwendungsfällen vorteilhaft, wenn dem Lösungsmittelgemisch, dem sogenannten Schlicker, vor dem Schlickerprozess, d. h. dem Auftragen des Lösungsmittelgemischs, ein Lithium-Salz zugesetzt wird. Hierdurch kann verhindert werden, dass während des Schlickerprozesses und dem nachfolgenden Abdampfen des Lösungsmittels in unerwünschter Weise Lithium bzw. Lithium-Ionen aus der Lithium-Ionen-Quelle gelöst werden.

Bei einer weiteren Ausgestaltung kann die Beschichtung auch frei von Lösemitteln erfolgen. Hierbei wird die Lithium-Ionen-Quelle, die vorzugsweise in Form von partikelförmigem Feststoff zu Anwendung kommt, mit einem Binder vermischt und in einem Knet- und Mischprozess vermengt werden. Dieser Knet- und Mischprozess kann vorteilhafterweise mit einem Extrusionsprozess kombiniert werden. Hierbei können die Parameter Volumenanteil des Bindemittels, Volumenanteil der Lithium-Ionen-Quelle, Partikelgröße der Lithium-Ionen-Quelle und Schichtdicke der aufzutragenden Beschichtung in dem Bereich gewählt werden, wie dies zuvor bereits im Rahmen der lösemittelhaltigen Beschichtung beschrieben worden ist.

Vorliegend wird ferner ein Verfahren zur Herstellung einer Batteriezelle vorgeschlagen, das wenigsten die folgenden Schritte aufweist:
a) Erzeugen mindestens eines Zellstapels mit wenigstens einer Anode, einer Kathode und einem Separator;
b) Anordnen des mindestens einen Zellstapels in einer wenigstens einteiligen Hülle;
c) Anordnen eines Elektrolyten in der Hülle;
d) Anordnen mindestens einer Lithium-Ionen-Quelle in der Hülle, so dass diese in direktem Kontakt mit dem Elektrolyten gelangt;
e) Verschließen der Hülle.

Die Schritte a) bis e) können wenigstens einmal in der hier angegebenen Reihenfolge a), b), c), d) und e) durchgeführt werden. Es ist möglich, dass diese Schritte unterschiedlich oft und/oder zumindest teilweise zeitlich überlagernd durchgeführt werden.

Die Schritte a) bis c) können einzeln oder kombiniert vor dem Schritt d) erfolgen, wobei die Lithium-Ionen-Quelle dann in einem separaten Schritt nachträglich in die Hülle eingebracht wird.

Die Lithium-Ionen-Quelle kann bei bestimmten Ausführungsformen zusammen mit Komponenten der Batteriezelle in die Hülle eingebracht werden. Dies bedeutet der Schritt d) wird zusammen mit wenigstens einem der Schritte a) bis c) ausgeführt. Dieses ist beispielsweise dann der Fall, wenn die Lithium-Ionen-Quelle als Beschichtung einer Anode, Kathode, eines Separators oder der Hülle der Batteriezelle ausgebildet ist und bereits in einem früheren Herstellungsschritt auf die Komponente aufgebracht bzw. in diese eingebracht worden ist. Der Begriff "Beschichtung" kann in diesem Zusammenhang vorsehen, dass die Lithium-Ionen-Quelle als eigenständige Schicht auf einer Komponente ausgebildet ist. Diese kann beispielsweise in Form einer Schicht auf dem Aktivmaterial einer Anode, einer Kathode, eines Separators oder einer sonstigen Oberfläche innerhalb der Hülle aufgebracht sein. Alternativ oder kumulativ kann die Lithium-Ionen-Quelle als integraler Bestandteil einer Komponente ausgebildet sein. Hierbei kann die Lithium-Ionen-Quelle beispielsweise ein Bestandteil der Elektroden und Separatoren sein. Insbesondere bietet es sich dazu an die Lithium-Ionen-Quelle in das Aktivmaterial der Anoden bzw. Kathoden zu integrieren.

Insbesondere kann das Verfahren auch so ausgeführt werden, dass die mindestens eine Lithium-Ionen-Quelle mit wenigstens einer Keramik, einem Glas, einer Glaskeramik oder einem Polymer ausgebildet wird. Hierdurch können die zuvor bereits erwähnten Vorteile erreicht werden.

Weiterhin ist es auch vorteilhaft, wenn die mindestens eine Lithium-Ionen-Quelle vor dem Anordnen in der Hülle wenigstens aktiviert oder vorgespannt wird. Dieses Aktivieren kann beispielsweise dadurch erreicht werden, dass die Lithium-Ionen-Quelle durch einen lonenaustausch aktiviert wird, was beispielsweise durch ein Salzbad erreicht werden kann. Alternativ können als Feststoff auch vorgespannte Gläser zur Anwendung kommen, wobei eine Steuerung der Zersetzung, d. h. der Abgabegeschwindigkeit von Lithium-Ionen, durch den Aspekt der Vorspannung steuerbar ist. Die Aktivierung der Lithium-Ionen-Quelle mittels Ionenaustauschs ermöglicht nicht nur eine Steuerung der Geschwindigkeit der Zersetzung der vorzugsweise als Feststoff ausgebildeten Lithium-Ionen-Quelle, sondern kann auch dazu genutzt werden, diesen so auszubilden, dass sich der Feststoff nahezu vollständig auflöst.

Die Auflösung des Feststoffs führt zu einer Verringerung der Schichtdicke und somit einer Verringerung der Dicke des gesamten Zellstapels oder -wickels. Typischerweise wächst die Dicke des Zellstapels über die Lebensdauer der Batteriezelle an. Dies ist beispielsweise durch die Nebenreaktionen, wie beispielsweise die SEI (Solid Electrolyte Interface) -Bildung bedingt, durch die Lithium-Ionen "verloren" gehen bzw. "verbraucht" werden. Die Auflösung des Feststoffs wirkt diesem Prozess entgegen und wirkt sich somit auch positiv auch die mechanischen Eigenschaften der Zelle aus, indem die üblich geometrische Vergrößerung der Dicke des Zellstapel durch die Auflösung des Feststoffs zumindest teilweise kompensiert wird.

Sieht man vor, dass die Lithium-Ionen-Quelle als Ionenaustauscher ausgebildet wird, kann damit ein weiterer positiver Effekt erreicht werden, indem neben der Abgabe von Lithium-Ionen in den Elektrolyten auch unerwünschte Bestandteile aus dem Elektrolyten aufgenommen werden können. So können beispielsweise mittels des Ionenaustausches Kationen, wie etwa das Kation des Mangans (Mn²⁺), aufgenommen werden. Dieses Kation ist beispielsweise im Elektrolyten unerwünscht, da es zur Verschlechterung bzw. Beschädigung von Elektroden und insbesondere der Anoden führt. Bindet man derartige Kationen nun in der Lithium-Ionen-Quelle, wird auch dieser Verschleiß der Batteriezelle verhindert und die Lebensdauer bzw. Kapazität der Batteriezelle zusätzlich verlängert bzw. über einen deutlich längeren Zeitraum erhalten.

Weiterhin kann vorgesehen werden, dass Lithium-Ionen von der mindestens einen Lithium-Ionen-Quelle in Abhängigkeit von der Lithium-Ionen-Konzentration im Elektrolyten eigenständig und bedarfsgerecht abgegeben werden.

Dies lässt sich beispielsweise über die Konzentrationen der Lithium-Ionen in der Lithium-Ionen-Quelle, im Elektrolyten bzw. dem Verhältnis dieser Konzentrationen zueinander steuern. Grundsätzlich wird der Effekt genutzt, dass die Lithium-Ionen-Quelle immer anstrebt durch die Abgabe von Lithium-Ionen einen Ausgleich zu erreichen, wenn eine Differenz der Lithium-Ionen-Konzentrationen im Elektrolyten und in der Lithium-Ionen-Quelle vorliegt.

Hierdurch ist eine besonders gleichmäßige und dauerhafte Ergänzung von verbrauchten Lithium-Ionen möglich, was sich positiv auf die Lebensdauer und die Eigenschaften der Batteriezelle im Betrieb auswirkt. Hierbei kann die Lithium-Ionen-Quelle auch so ausgebildet werden, dass diese bei Bedarf die Lithium-Ionen auch in unterschiedlichen Mengen in den Elektrolyten abgibt. So kann eine neue Batteriezelle etwa mit einer Lithium-Quelle betrieben werden, die zunächst eine geringere Abgabegeschwindigkeit von Lithium-Ionen aufweist, wobei die Lithium-Ionen-Quelle dann aber mit zunehmendem Alter bzw. ansteigender Zyklenanzahl Lithium-Ionen mit einer größer werdenden Abgabegeschwindigkeit bzw. Abgaberate in den Elektrolyten abgibt.

Gemäß einem weiteren Aspekt wird vorgeschlagen, dass mindestens eine separate Lithium-Ionen-Quelle in direktem Kontakt mit dem Elektrolyten einer Batteriezelle steht und zur wenigstens teilweisen Kompensation eines aus dem Betrieb der Batteriezelle resultierenden Konzentrationsschwunds an Lithium-Ionen im Elektrolyten zu verwenden ist. Diese Verwendung kann mit den weiteren Erläuterungen auch zum Verfahren weiter spezifiziert werden. Demnach kann die Verwendung insbesondere auch zur Erhöhung der Lebensdauer bzw. der möglichen Zyklenanzahl der Batteriezelle erfolgten, gerade bei einem Betrieb im Kraftfahrzeug.

Insbesondere profitiert ein Kraftfahrzeug von der vorliegenden Erfindung, wenn dieses mit wenigstens einer Batteriezelle ausgestattet ist, die gemäß der vorliegenden Erfindung ausgebildet bzw. gemäß dem vorgeschlagenen Verfahren hergestellt ist. Eine solche Batteriezelle weist eine wesentlich längere Haltbarkeit und Leistungsfähigkeit auf, da der darin befindliche Elektrolyt fortlaufend regeneriert wird. Dies gilt sowohl für mobile als auch für mögliche stationäre Anwendungen der Erfindung, wie beispielsweise in stationären Speichersystem für elektrische Energie. Solche Systeme können elektrische Energie speichern, wenn diese ausreichend oder im Übermaß verfügbar ist, um sie anschließend bei Bedarf wieder abzugeben. Zudem können bei bestimmten Anwendungsfällen nicht nur verbrauchte Lithium-Ionen ersetzt, sondern auch unerwünschte Stoffe, die beispielsweise zur Zerstörung von Anoden, Kathoden oder Separatoren führen, aus dem Elektrolyten entfernt werden

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
Fig.1: eine schematische Schnittansicht einer Batteriezelle;
Fig. 2: eine Schnittansicht einer Komponente mit einer ersten Lithium-Ionen-Quelle;
Fig. 3: eine Schnittansicht einer Komponente mit einer zweiten Lithium-Ionen-Quelle;
Fig. 4: eine Schnittansicht einer Komponente mit einer dritten Lithium-Ionen-Quelle;
Fig. 5: eine Schnittansicht einer Komponente mit einer vierten Lithium-Ionen-Quelle;
Fig. 6: eine Schnittansicht einer Komponente mit einer fünften Lithium-Ionen-Quelle;
Fig. 7: eine Schnittansicht einer Komponente mit einer sechsten Lithium-Ionen-Quelle; und
Fig. 8: ein Kraftfahrzeug mit Batteriezellen gemäß der vorliegenden Erfindung;

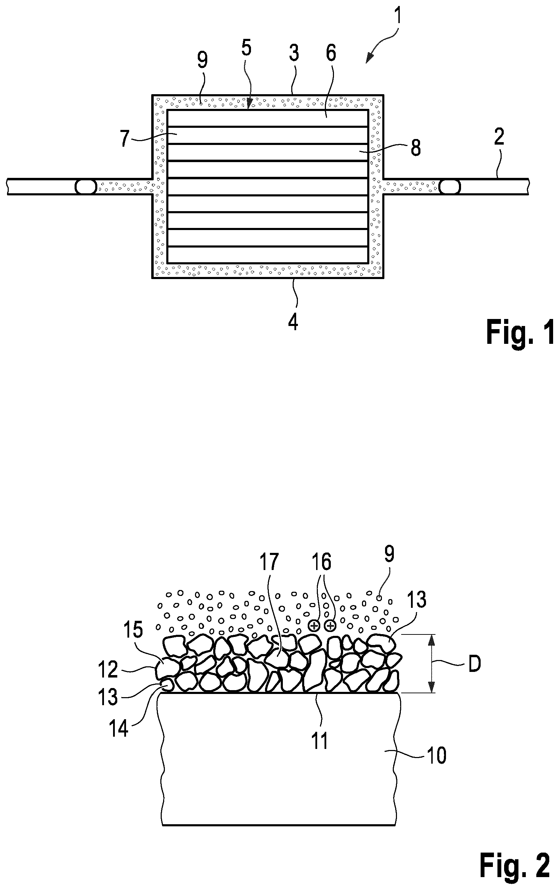

In Fig. 1 ist eine Batteriezelle 1 schematisch und in einer seitlichen Schnittdarstellung dargestellt. Die Batteriezelle 1 weist eine Hülle 2 auf, die von einer oberen Pouchfolie 3 und einer unteren Pouchfolie 4 gebildet wird. Beide Pouchfolien 3, 4 sind mittels einer Schweißnaht dicht miteinander verbunden. Innerhalb der Hülle 2 befindet sich ein Zellstapel 5, der aus Anoden 6, Separatoren 7 und Kathoden 8 besteht, die abwechselnd übereinandergestapelt sind. Der Zellstapel 5 wird dabei von einem Elektrolyten 9 umgeben. Insbesondere ist der Elektrolyt 9 auch in Poren oder Vertiefungen der Anoden 6, Separatoren 7 und Kathoden 8 vorhanden und kann bei Bedarf auch dort Lithium-Ionen von der Lithium-Ionen-Quelle aufnehmen.

Die Fig. 2 zeigt eine Komponente 10 der Batteriezelle 1 in einer vergrößerten Schnittansicht. Bei der Komponente 10 kann es sich beispielsweise um die Hülle 2, die Anode 6, den Separator 7, die Kathode 8 oder einen sonstigen Bestandteil der Batteriezelle 2 handeln, der innerhalb der Hülle 2 angeordnet ist. Auf einer Oberfläche 11, die mit dem Elektrolyten 9 in Kontakt steht, ist eine Schicht 12 aufgebracht, die aus einer Vielzahl von Partikeln 13 eines Feststoffes 14 und einem auf der Oberfläche der Partikel 13 befindlichen Bindemittel 15 besteht. Die Schicht 12 weist dabei eine Schichtdicke D auf, die zwischen 0,5 µm und 20 µm beträgt. Bei der dargestellten Ausführungsform handelt es sich um eine Schicht 12, die mittels eines Lösemittels auf die Komponente 10 aufgebracht worden ist. Das Lösemittel hat dabei das Bindemittel 15 zunächst angelöst, sodass beide Bestandteile zusammen mit den Partikeln 13 des Feststoffs 14 auf die Komponente 10 aufgebracht werden konnten. Nach dem Verflüchtigen des Lösemittels sind dann die Partikel 13 und das an der Oberfläche der Partikel 13 befindlichen Bindemittel 15 zurückgeblieben. Hierbei sorgt das Bindemittel 15 für eine Verbindung der Partikel 13 mit der Komponente 10. Nach dem Aufbringen der Schicht 12 kann der Elektrolyt 9 die Partikel 13 umströmen und bei Bedarf Lithium-Ionen 16 aus den als Lithium-Ionen-Quelle 17 wirkenden Partikeln 13 aufnehmen. Vorzugsweise ist die Konzentration von Lithium-Ionen 16 in der Schicht 12 und insbesondere in dem Feststoff 14 so gewählt, dass diese Konzentration annähernd der gewünschten Konzentration von Lithium-Ionen 16 im Elektrolyt 9 entspricht. Auf diese Weise werden auf dem Wege des Konzentrationsausgleichs verbrauchte Lithium-Ionen 16 des Elektrolyten 9 fortlaufend von der Lithium-Ionen-Quelle 17 ersetzt.

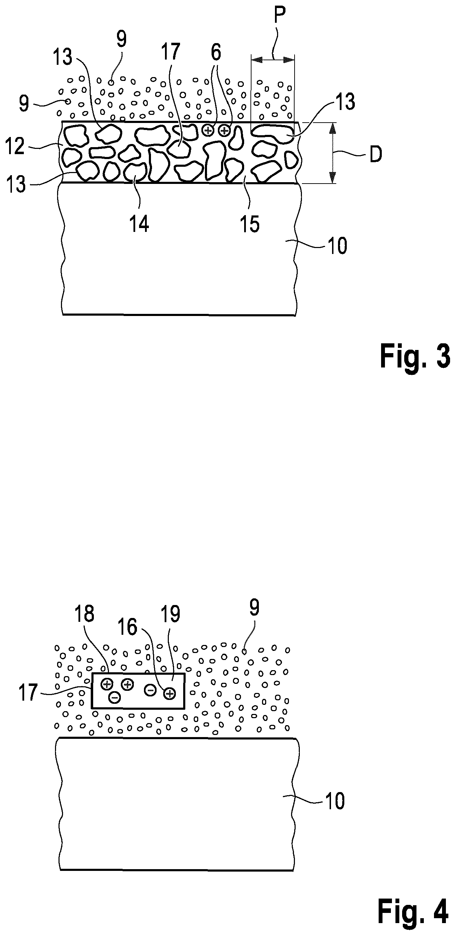

Die Fig. 3 zeigt eine andere Ausführungsform, bei der wiederum auf der Komponente 10 eine Schicht 12 aufgebracht ist. Die Schichtdicke D der Schicht 12 beträgt wiederum zwischen 0,5 µm und 20 µm. Die Schicht 12 ist lösemittelfrei aufgebracht und besteht aus Partikeln 13 des Feststoffs 14 und einem Bindemittel 15. Die Größe P der Partikel 13 des Feststoffs 14 reicht von 0,1 µm bis 20 µm. Im eingebauten Zustand ist die Schicht 12 wiederum in unmittelbarem Kontakt mit dem Elektrolyt 9, sodass bei Bedarf Lithium-Ionen 16 an den Elektrolyt 9 abgegeben werden können.

In Fig. 4 ist eine Ausführungsform der vorliegenden Erfindung dargestellt, bei der die Komponente 10 wiederum im unmittelbaren Kontakt mit dem Elektrolyt 9 steht. Die Lithium-Ionen-Quelle 17 ist bei dieser Ausführungsform als separater Körper 18 ausgebildet, der ebenfalls mit dem Elektrolyt 9 in unmittelbarem Kontakt steht und Lithium-Ionen 16 bei Bedarf in den Elektrolyt 9 abgeben kann. Zusätzlich ist die Lithium-Ionen-Quelle 17 auch als lonentauscher 19 ausgebildet, um bei Bedarf unerwünschte Ionen aus dem Elektrolyt 9 aufnehmen zu können. Beispielsweise kann es sich bei diesen unerwünschten Ionen um Mn²⁺ Kationen des Mangans handeln, deren Vorhandensein im Elektrolyt 9 bei Batteriezellen 1 unerwünscht ist und negative Auswirkungen auf die Leistungsfähigkeit der Batteriezelle 1 mit sich bringen würde.

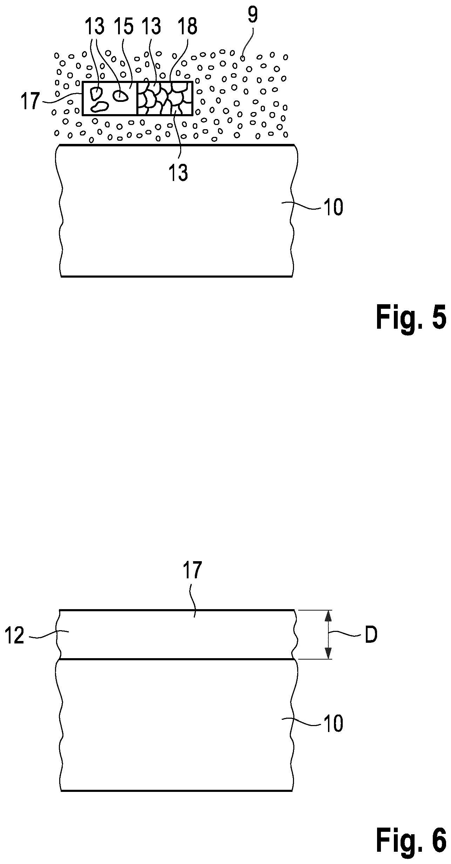

Die Fig. 5 zeigt eine Ausführungsform bei der die Lithium-Ionen-Quelle 17 wiederum als separater Körper 18 ausgebildet ist, wie dies bereits zuvor im Zusammenhang mit Figur 4 beschrieben worden ist. Der Körper 18 wird dabei wiederum vom Elektrolyt 9 umgeben. Hierzu kann der Körper 18 beispielsweise auf zwei verschiedene Arten hergestellt sein. In der linken Hälfte ist eine Ausführungsform dargestellt, bei der die Partikel 13 mittels des Bindemittels 15 zu einem Körper 18 verbunden werden. Auf der rechten Hälfte ist eine Ausführungsform dargestellt, bei der die unterschiedlich großen Partikel 13 zu einem Formkörper verpresst sind. Dieses Verpressen kann mit oder ohne die Verwendung von Bindemittel 15 erfolgen. Je nach Anwendungsfall kann eine zusätzliche Temperaturbehandlung vorgesehen werden, um eine weitere Verdichtung der Partikel 13 des Formkörpers zu erreichen. Das Verpressen der Partikel 13 hat den Vorteil, dass eine besonders große Oberfläche für Reaktionen zwischen der Lithium-Ionen-Quelle 17 und dem Elektrolyt 9 geschaffen werden kann.

Die Fig. 6 zeigt wiederum die Komponente 10 mit einer darauf angebrachten Lithium-Ionen-Quelle 17. Die als Schicht 12 ausgebildete Lithium-Ionen-Quelle 17 ist beispielsweise mittels eines Verfahrens wie der Atomic Layer Deposition ALD, der Physical Layer Deposition PVD oder der Chemical Layer Deposition CVD auf die Komponente 10 aufgebracht. Die mittels dieser vorgenannten Verfahren aufgebrachte Schicht 12 weist eine gegenüber den zuvor beschriebenen Beschichtungen geringere Schichtdicke auf, die zwischen 0,02 µm und 10 µm betragen kann. Mittels der genannten Verfahren kann der Feststoff 14 sehr gleichmäßig als Schicht 12 aufgetragen werden.

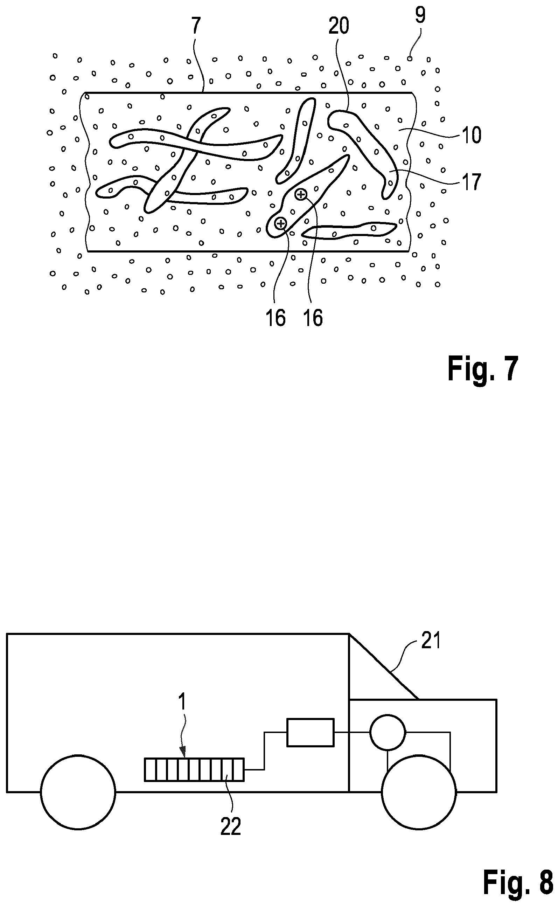

In Fig. 7 ist eine Komponente 10 dargestellt, bei der die Lithium-Ionen-Quelle 17 in Form von Fasern 20 ausgebildet ist. Bei der hier dargestellten Komponente 10 kann es sich beispielsweise um einen Separator 7 handeln, der durch die Fasern 20 verstärkt wird. Auch hierbei ist die Lithium-Ionen-Quelle 17 wiederum vom Elektrolyt 9 unmittelbar umgeben bzw. steht in unmittelbarem Kontakt mit diesem, um bei Bedarf Lithium-Ionen 16 in das Elektrolyt 9 abgeben zu können.

Schließlich ist in Fig. 8 ein Fahrzeug 21 mit einer Batterie 22 dargestellt, die eine Vielzahl von Batteriezellen 1 gemäß der vorliegenden Erfindung umfasst. Die Batterie 22 kann mit der vorliegenden Erfindung über einen sehr langen Zeitraum und über sehr viele Ladezyklen betrieben werden ohne Leistungseinbußen aufgrund eines sich verschlechternden Elektrolyten 9 zu erfahren.

### Bezugszeichenliste

- 1: Batteriezelle
- 2: Hülle
- 3: obere Pouchfolie
- 4: untere Pouchfolie
- 5: Zellstapel
- 6: Anode
- 7: Separator
- 8: Kathode
- 9: Elektrolyt
- 10: Komponente
- 11: Oberfläche
- 12: Schicht
- 13: Partikel
- 14: Feststoff
- 15: Bindemittel
- 16: Lithium-Ion
- 17: Lithium-Ionen-Quelle
- 18: Körper
- 19: lonentauscher
- 20: Faser
- 21: Fahrzeug
- 22: Batterie

## Patentansprüche

1. Batteriezelle (1) mit einem Zellstapel (5) oder Zellwickel, der wenigstens eine Anode (6), eine Kathode (8), einen dazwischen angeordneten Separator (7) und einen Elektrolyten (9) aufweist, die zusammen von einer Hülle (2) umschlossen sind,
**dadurch gekennzeichnet, dass** innerhalb der Hülle (2) mindestens eine separate Lithium-Ionen-Quelle (17) angeordnet ist, die in direktem Kontakt mit dem Elektrolyten (9) steht.

2. Batteriezelle (1) nach dem vorhergehenden Anspruch, **dadurch gekennzeichnet, dass** die mindestens eine Lithium-Ionen-Quelle (17) ein Feststoff (14) ist.

3. Batteriezelle (1) nach einem der vorhergehenden Ansprüche, **dadurch gekennzeichnet, dass** die Konzentration der Lithium-Ionen (16) in der mindestens einen Lithium-Ionen-Quelle (17) zwischen 2 mol/Liter bis 40 mol/Liter beträgt.

4. Batteriezelle (1) nach einem der vorhergehenden Ansprüche, **dadurch gekennzeichnet, dass** die mindestens eine Lithium-Ionen-Quelle (17) wenigstens eine Keramik, ein Glas, eine Glaskeramik oder ein Polymer umfasst.

5. Batteriezelle (1) nach einem der vorhergehenden Ansprüche 2 oder 3, **dadurch gekennzeichnet, dass** der Feststoff (14) eine Partikelgröße (P) aufweist, die zwischen 0,1 µm und 20 µm liegt.

6. Batteriezelle (1) nach einem der vorhergehenden Ansprüche, **dadurch gekennzeichnet, dass** die mindestens eine Lithium-Ionen-Quelle (17) in Form einer Beschichtung (12) oder eines Spenderobjektes (18) ausgebildet ist.

7. Batteriezelle (1) nach dem vorhergehenden Anspruch, **dadurch gekennzeichnet, dass** eine Schichtdicke (D) der Beschichtung (12) der Lithium-Ionen-Quelle (17) zwischen 0,02 µm bis 20 µm beträgt.

8. Verfahren zur Herstellung einer Batteriezelle (1), das wenigsten die folgenden Schritte aufweist:
a) Erzeugen mindestens eines Zellstapels (5) mit wenigstens einer Anode (6), einer Kathode (8) und einem Separator (7);
b) Anordnen des mindestens einen Zellstapels (5) in einer wenigstens einteiligen Hülle (2);
c) Anordnen eines Elektrolyten (9) in der Hülle (2);
d) Anordnen mindestens einer Lithium-Ionen-Quelle (17) in der Hülle (2), so dass diese in direktem Kontakt mit dem Elektrolyten (9) gelangt;
e) Verschließen der Hülle (2).

9. Verfahren nach dem vorhergehenden Anspruch, wobei die mindestens eine Lithium-Ionen-Quelle (17) mit wenigstens einer Keramik, einem Glas, einer Glaskeramik oder einem Polymer ausgebildet wird.

10. Verfahren nach einem der Ansprüche 8 oder 9, wobei die mindestens eine Lithium-Ionen-Quelle (17) vor dem Anordnen in der Hülle (2) wenigstens aktiviert oder vorgespannt wird.

11. Verfahren nach einem der Ansprüche 8 bis10, wobei der Schritt d) zusammen mit wenigstens einem der Schritte a) bis c) ausgeführt wird.

12. Verfahren nach einem der vorhergehenden Ansprüche 8 bis 11, wobei die Lithium-Ionen-Quelle (17) als lonentauscher (19) ausgebildet wird.

13. Verfahren zum Betrieb einer Batteriezelle (1) nach einem der vorhergehenden Ansprüche 1 bis 7 oder hergestellt mit einem Verfahren nach einem der Ansprüche 8 bis 12, wobei Lithium-Ionen (16) von der mindestens einen Lithium-Ionen-Quelle (17) in Abhängigkeit von der Lithium-Ionen-Konzentration im Elektrolyt (9) eigenständig und bedarfsgerecht abgegeben werden.

14. Verwendung mindestens einer separaten Lithium-Ionen-Quelle (17) in direktem Kontakt mit dem Elektrolyten (9) einer Batteriezelle (1) zur wenigstens teilweisen Kompensation von aus dem Betrieb der Batteriezelle (1) resultierenden Konzentrationsschwund an Lithium-Ionen (16) im Elektrolyten (9).

15. Kraftfahrzeug (21) mit wenigstens einer Batteriezelle (1) nach einem der Ansprüche 1 bis 7 oder hergestellt mit einem Verfahren nach einem der Ansprüche 8 bis 12.
